(19) Europäisches Patentamt
European Patent Office
Office européen des brevets

(11) Numéro de publication : **0 177 655**
**B1**

(12) **FASCICULE DE BREVET EUROPÉEN**

(45) Date de publication du fascicule du brevet : **28.06.89**

(51) Int. Cl.⁴ : **G 05 B 19/18**, G 05 B 19/405

(21) Numéro de dépôt : **84402056.0**

(22) Date de dépôt : **12.10.84**

(54) **Procédé d'usinage d'un profil fini et dispositif de mise en œuvre du procédé.**

(43) Date de publication de la demande :
**16.04.86 Bulletin 86/16**

(45) Mention de la délivrance du brevet :
**28.06.89 Bulletin 89/26**

(84) Etats contractants désignés :
**CH DE GB IT LI**

(56) Documents cités :
**DE-A- 1 199 855**
**FR-A- 2 466 798**
**FR-A- 2 480 960**
**FR-A- 2 480 961**
**FR-A- 2 480 962**
**FR-A- 2 480 963**
**FR-A- 2 523 329**
**LE NOUVEL AUTOMATISME, octobre 1984, no. 49, pages 49-56, Paris, FR; A. DUPONT: "La nouvelle génération de commande numérique"**

(73) Titulaire : **NUM S.A. (Société anonyme)**
**323, Rue de la Garenne**
**F-92005 Nanterre Cedex (FR)**

(72) Inventeur : **Reboli, Jean-Claude**
**58, Av. de la république**
**F-94100 Saint Maur des Fosses (FR)**

(74) Mandataire : **Marquer, Francis et al**
**CABINET MOUTARD 35, avenue Victor Hugo Résidence Champfleury**
**F-78180 Voisins-le-Bretonneux (FR)**

**EP 0 177 655 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé d'usinage d'un profil fini à partir d'un profil brut et le dispositif de mise en œuvre du procédé.

On connaît des procédés d'usinage d'un profil fini dans lesquels le profil brut est usiné suivant des déplacements parallèles au profil fini. En général, ces procédés ont pour inconvénient de faire varier la profondeur de passe ou l'épaisseur du copeau, donc de ne pas utiliser l'outil à son maximum de capacité.

Il est également connu de partir d'un profil brut simulant une forme de barreau cylindrique et de l'usiner suivant une direction parallèle à l'axe de broche. Cet autre procédé a l'inconvénient, lorsque l'on utilise des profils bruts matricés ou sortant de fonderie et ayant un profil avoisinant le profil fini, de faire perdre du temps par des déplacements inutiles de l'outil entre le profil brut simulant un cylindre et le profil brut matricé.

La présente invention a pour but principal d'éliminer les inconvénients de l'art antérieur, c'est-à-dire d'utiliser l'outil à sa capacité maximum et de limiter le plus possible les déplacements improductifs de l'outil.

Ce résultat est atteint grâce à un procédé d'usinage d'un profil fini par une machine-outil à commande numérique caractérisé en ce qu'il comprend les étapes suivantes :

1) Introduction d'une description du profil fini, puis du profil brut, respectivement dans un premier et un deuxième moyens de mémorisation ;

2) Traitement de la description du profil fini pour supprimer, après analyse, les portions de profil présentant une concavité et rangement de la description des portions de profil présentant une concavité dans un troisième moyen de mémorisation ;

3) Rangement du profil fini « dit épuré », c'est-à-dire débarrassé des portions concaves, dans un quatrième moyen de mémorisation ;

4) Elaboration de l'ébauche du profil fini épuré par passes successives en déplaçant l'outil entre les coordonnées fournies par la mémoire du profil fini épuré et la mémoire du profil brut.

Un autre but de l'invention est d'obtenir une capacité maximale de coupe lors de l'usinage du profil fini, et ce, même dans les parties concaves.

Ce résultat supplémentaire est atteint grâce à un procédé caractérisé en ce que, lors de l'opération de tournage d'une concavité complexe, la commande numérique :

a) récupère le profil d'une concavité rangée dans le troisième moyen de mémorisation et examine les portions de profil situées à droite et à gauche d'une droite de descente programmée ;

b) élimine, des profils situés à droite ou à gauche de la droite de descente, les concavités incluses dans l'un des profils droit ou gauche, pour transformer la concavité complexe en concavité simple ;

c) effectue l'opération d'usinage de la concavité simple ;

d) réitère les opérations précédentes sur une autre concavité simple de la concavité complexe.

Un troisième but de l'invention est la réalisation d'un dispositif permettant la mise en œuvre du procédé de l'invention.

Ce troisième résultat est obtenu au moyen d'un dispositif comprenant :

— des moyens de délivrer, à un microprocesseur relié à un bus, un programme définissant le profil brut et le profil fini, ledit microprocesseur, après compilation, adressant lesdits profils brut et fini respectivement dans des premières mémoires vives ;

— des secondes mémoires mortes, reliées au bus, comprenant respectivement les paramètres de la machine d'usinage à commander et un logiciel ;

— des moyens de traiter le profil fini pour en ôter les concavités et élaborer un profil fini dit épuré ;

— une troisième mémoire vive destinée à recevoir la description des parties concaves ;

— une quatrième mémoire vive destinée à recevoir le profil fini dit épuré, c'est-à-dire ne comprenant plus de concavité,

— des moyens d'assurer la liaison et la transmission des commandes entre le bus et la machine à commander.

D'autres particularités et avantages de l'invention apparaîtront plus clairement à la lecture de la description ci-après, faite en se référant aux dessins annexés, dans lesquels :

La figure 1 est une vue schématique de moyens permettant la mise en œuvre du procédé d'usinage de l'invention ;

La figure 2 représente les passes d'usinage de l'outil entre un profil brut et un profil fini selon le procédé d'usinage ;

La figure 3 est une vue latérale d'un profil fini comportant des gorges ;

Les figures 4 et 5 sont des vues en coupe d'une concavité simple ou gorge et des illustrations des étapes d'usinage de cette gorge ; et

La figure 6 est une vue en coupe d'une concavité complexe.

A la figure 1, on a représenté une machine-outil 1 supportant une pièce à usiner 2. Cette machine-outil comporte une tourelle porte-outil non représentée. Les différents organes de commande et les différents capteurs de cette machine-outil sont reliés par une carte électronique 3 jouant le rôle de coupleur d'axes, qui est branchée sur un bus 4. La carte 3 a pour fonction d'assurer la liaison avec les capteurs qui lisent la position des parties mobiles de la machine et de piloter leur vitesse de déplacement.

Le bus 4 est relié à un microprocesseur 5 et à un ensemble de mémoires 7-8-9, comprenant respectivement au moins une mémoire vive R.A.M. 7, une mémoire E.E.P.R.O.M. 8, et une mémoire R.E.P.R.O.M. 9. La mémoire R.E.P.R.O.M. contient les codes, des instructions et le logiciel permettant le fonctionnement du dispositif.

La mémoire E.E.P.R.O.M. contient les paramètres de la machine, c'est-à-dire les définitions des courses des organes mobiles et des gains d'asservissement.

La mémoire R.A.M. peut être constituée d'un ensemble de mémoires vives et contient tout le reste des informations nécessaires au fonctionnement du dispositif, comme on l'expliquera dans la suite.

Le bus 4 est également relié à une carte 6 jouant le rôle de coupleur série et assurant la transmission et la mise en forme des signaux qui transitent par le bus et sont destinés à un ensemble 10 comportant un clavier de commande et un organe de visualisation.

Une deuxième carte de couplage série assure la liaison entre le bus et un lecteur de ruban 12.

Le procédé d'usinage d'une ébauche est mis en œuvre au moyen du dispositif décrit en se référant à la figure 1.

Lorsqu'on veut par exemple, usiner la pièce 2 suivant un profil fini représenté par le tracé $P_1$ à $P_7$ de la figure 2, et que la pièce 2 a été obtenue par exemple en sortie de fonderie ou de matriçage avec un profil brut défini par les points A, B, C, D de la figure 2, le programmeur fait entrer dans le dispositif, soit à partir du lecteur de ruban 12, soit à partir du clavier avec contrôle sur le dispositif de visualisation, le programme qui définit le profil fini de la pièce et son profil brut, ainsi que les indications qui précisent si l'ébauche doit s'effectuer parallèlement à l'axe X, ou parallèlement à l'axe Z.

De même, dans ses instructions, le programme précisera la surépaisseur suivant l'axe X et Z qui devra être admise pour que, en fin d'usinage, on puisse appeler un cycle de finition de la pièce qui la terminera avec la précision et la finition souhaitées.

Le programme précisera aussi la profondeur de passe, la vitesse d'avance de l'outil et la vitesse de broche.

Ces précisions seront définies dans le format explicité ci-après :

Format : G64 $N_{P1}$ $N_{P7}$ XA ZA I K P ou R F S

$N_{P1}$ à $N_{P7}$ : définition du profil fini : ébauche de $N_{P1}$ vers $N_{P7}$, l'ordre des séquences donnant le sens de l'usinage.

XA ZA : coordonnées d'arrêt pour les premières passes d'ébauche.

I, K : surépaisseur en X et Z.

P ou R : profondeur de passe :

P ébauche longitudinale

R ébauche transversale

F — S : vitesse d'avance et vitesse de broche.

P ou R, F, S peuvent être modifiés en cours d'ébauche.

Un exemple de programmation permettant de définir les profils brut et fini de la figure 2 est donné ci-dessous :

Programmation

N10 G $X_0$ $Z_0$ : Initialisation en X et Z pour début de l'ébauche.
N20 G79 N100 : Saut à la séquence d'appel du cycle d'ébauche
N30 $G_1$ $X_{P7}$ $Z_{P7}$
N40 $X_{P6}$
N50 A 45B—
N60 A 180 $X_{P4}$ $Z_{P4}$ — Définition du profil fini
N70 A 60B—
N80 A 90 $X_{P2}$ $Z_{P2}$
N90 $X_{P1}$ $Z_{PI}$
N100 G64 N90 N30 $X_A$ $Z_A$ I K P F S Zone d'ébauche
N120 $X_B$ $Z_B$
N130 $X_C$ $Z_C$ : Séquence de changement de — Définition du profil brut
N140 $X_D$ $Z_D$ : valeurs de P, F et S
N150 $X_E$ $Z_E$
N160 G80 X Z : Fin du programme d'ébauche (dégagement)
N170 G77 N30 N90 G41 T D F S : Exécution de la finition

Cet exemple ne comporte pas de gorge ; toutefois, dans le cas représenté à la figure 3, le profil fini peut comporter deux gorges F et G.

Dans ce cas, le programmeur modifiera en conséquence son programme de profil fini.

Le programme ci-dessous correspond à celui écrit par le programmeur dans le cas d'un profil conforme à celui de la figure 3 :

N10 G$X_0$ $Z_0$
N20 G79 N100
N30 Gl $X_{P15}$ $Z_{P15}$
N31 $X_{P14}$
N32 $X_{P13}$ $Z_{P13}$
N33 $Z_{P12}$
N34 $X_{P11}$ $B_{R11}$ $B_{R11}$ = rayon du congé
N35 $Z_{P10}$ $B_{R10}$ $B_{R10}$ = rayon du congé
N36 $X_{P9}$
N37 $Z_{P8}$
N38 $X_{P7}$ $Z_{P7}$
N39 $X_{P6}$
N40 $X_{P5}$ $Z_{P5}$
N41 $X_{P4}$
N42 $X_{P3}$ $Z_{P3}$
N43 $X_{P2}$
N44 $Z_{P1}$

Le programme sera rangé dans une zone de la R.A.M. 7.

On supposera que le programme du profil brut est rangé dans la zone 70 de la R.A.M. ; le dispositif va alors fonctionner de la façon suivante lors du traitement d'un cycle d'ébauche :

Une fois que le profil fini a été introduit dans la zone 71 de la R.A.M. 7, le microprocesseur effectue une recherche des parties concaves du profil fini, en recherchant d'abord les gorges telles que F (figure 3). Pour cela, le microprocesseur, grâce au logiciel inclus dans la mémoire 9, compare les valeurs des mots contenus dans les mémoires et cherche s'il existe des $X^*_{i+1}$ tels que

$$X^*_{i+1} \geqslant X_i \qquad (1)$$

Dans l'exemple, ce sera $X_{P13}$.

Ensuite, il recherche le plus grand des $X^*_{i+1}$ satisfaisant la relation (1). Dans l'exemple, ce sera $X_{P13}$.

Cette opération est seulement effectuée lorsque l'on a plusieurs gorges incluses successivement l'une dans l'autre.

Enfin, le microprocesseur cherche, dans les valeurs X'i précédant la valeur $X^*_{i+1}$, celle qui est égale ou supérieure à $X^*_{i+1}$. Dans l'exemple considéré, X'i correspond à $X_{P9}$.

Le microprocesseur prend alors la portion du programme comprise entre les deux adresses N32 et N36, où se trouvent respectivement les valeurs $X_{P13}$ et $X_{P9}$ et range cette portion de programme dans une deuxième zone 72 de la mémoire vive 7 R.A.M., zone que l'on appellera « zone de stockage des programmes de profil fini de gorge ».

Après cette opération, le programme de l'ébauche du profil fini ne comprend plus les instructions N33 à N36 incluse. De même, pour les gorges dont la concavité est orientée selon Z, le microprocesseur 5 va rechercher dans le contenu de la zone 71 s'il existe des $Z^*_{n+1}$ tel que $Z^*_{n+1} < Z_n$.

Dans l'exemple considéré, il s'agit de $Z_{P5}$.

Ensuite, le microprocesseur recherche le plus grand parmi les $Z_n^*$ précédant un $Z^*_{n+1}$. Dans l'exemple, il s'agit de $Z_{P3}$ à l'adresse N42. Enfin, le microprocesseur recherche l'adresse où se trouve un Zn qui soit supérieur ou égal à $Z_n^*$. Dans l'exemple, ce sera N38.

Le microprocesseur élimine du programme du profil fini les instructions comprises entre les adresses N39 à N42 incluse, et va ranger ces instructions dans la zone de la mémoire vive 7.

Le nouveau programme de profil fini, débarrassé des portions concaves, est rangé dans une troisième zone 73 de la R.A.M. Une fois cette opération réalisée, le microprocesseur va partir du nouveau profil fini défini dans la zone mémoire 73, profil ne comportant plus de parties concaves et effectuer une translation suivant X d'une valeur I, et suivant Z d'une valeur K du nouveau profil fini, en ajoutant une valeur K à chaque mot mémoire contenant une valeur Z, et une valeur I à chaque mot mémoire contenant une valeur X. Enfin, partant de cette table définissant le nouveau profil fini translaté, rangée dans une quatrième zone 74, ou bien élaborée au fur et à mesure des besoins du microprocesseur à partir de la table 73, le microprocesseur calcule les coordonnées des points représentatifs du déplacement de l'outil et transmet les valeurs représentatives des déplacements à effectuer au coupleur 3 pour asservir la machine. Dans le cas d'une ébauche réalisée parallèlement à l'axe Z, le microprocesseur va déterminer, grâce à son logiciel, le dernier point précédant une variation de ΔX sur le profil brut et ordonner le déplacement de l'outil de la position de repos $X_0$, $Z_0$, jusqu'au point B (figure 2).

Le microprocesseur calcule les coordonnées du point $X_1$, $Z_1$ le long de la droite BC, pour lequel la variation du $\Delta X$ est égale à la profondeur de passe fixée par le programme.

Le microprocesseur ordonne le déplacement de l'outil du point B au point de coordonnées $X_1$, $Z_1$, puis du point $X_1$, $Z_1$ au point $X_1$, $Z_a + K$.

L'outil monte ensuite jusqu'à $X_A + I$ ; $Z_a + K$ et va, en passant par le point B, au point de coordonnées $X_2$, $Z_2$ qui correspond à un nouveau $\Delta X$ égal à la profondeur de passe P. L'outil se déplace ensuite du point $X_2$, $Z_2$ au point $X_2$, $Z_{P2} + K$, puis remonte vers le point $X_{P2} + I$, $Z_{P2} + K$ pour repartir vers le point $X_{P2} + I$, $Z_a + K$. L'outil remonte enfin en $X_1$, $Z_a + K$ pour retourner sur le profil brut et venir, le long de la droite BC, se positionner en $X_3$ $Z_3$. Les cycles se poursuivent ainsi jusqu'à ce que l'outil atteigne le point de coordonnées $X_e$, $Z_e$.

On comprend aisément que l'outil, partant des positions évaluées par le microprocesseur à partir des données du profil brut, perd moins de temps en déplacements inutiles et est toujours en train de couper, sauf dans les phases de dégagement et de retour de l'outil, au point suivant du profil brut non encore usiné. Par rapport au procédé classique qui consiste à utiliser comme profil brut l'image d'un barreau cylindrique, on gagne le temps des déplacements de l'outil dans la zone hachurée. Ces déplacements sont surtout pénalisants en ce qui concerne les déplacements de l'outil effectués dans le sens de passe, car, dans les phases de dégagement et de retour de l'outil, on peut utiliser une plus grande vitesse de déplacement.

D'autre part, comme le profil fini est exécuté sans les gorges, on peut utiliser des outils 13 du type représenté à la figure 2, avec un seul bord de coupe 14 orienté du côté du sens de passe.

Ces outils ont une résistance et une capacité de coupe plus grandes que celles des outils présentant deux surfaces de coupe et permettent donc d'effectuer des passes de profondeur plus grande, donc une ébauche plus rapide.

Ensuite, dans le cas où l'ébauche du profil fini doit comporter des gorges, le programmeur, dans le programme d'exécution rangé dans la mémoire 9, écrit deux instructions G65 commandant d'abord l'usinage de la portion de gorge à droite d'une droite de descente, puis l'usinage de la portion de gorge à gauche de la droite de descente.

Le format de l'instruction de cycle de gorge est le suivant :

Format

G65 N1 N2 A P ou R X ou Z I K F S
N1 et N2 sont deux séquences du profil fini de part et d'autre de la gorge.
A est l'angle de pénétration pour l'usinage (la pénétration s'effectue à la vitesse F programmée).
P ou R sont les profondeurs de passe suivant X ou Z.
F, S sont les vitesses d'avance et de broche.

L'ordre des séquences N1-N2 donne la partie devant être usinée :

N1-N2 : usinage à gauche de la droite A.
N2-N1 : usinage à droite de la droite A.

Le programmeur ajoute donc, à la suite du programme d'ébauche du profil sans gorge, les instructions suivantes :

N180 G65, $P_{12}$-$P_9$, A, P, $Z_{P9}$, K, F, S.
N190 : Instruction de changement d'outil
N200 G65, $P_9$-$P_{12}$, A, P, $Z_{P12}$ K, F, S.

Le microprocesseur utilise les profils de gorges de la mémoire 72 pour exécuter les calculs grâce au logiciel et commander les déplacements, comme représenté à la figure 4, amenant l'outil ayant le bord d'attaque à gauche, à descendre le long de la droite 40 et à prendre une passe de profondeur P jusqu'à la rencontre avec le profil translaté 41.

Ensuite, l'outil se dégage de la pièce, revient le long de la droite 40, effectue une seconde plongée et une deuxième passe 2. Le procédé se réitère, et les calculs se font comme indiqué précédemment, jusqu'à ce que l'outil ait enlevé toute la matière n'appartenant pas au profil fini, augmenté d'une surépaisseur comme représenté en 50, figure 5.

Ensuite, le microprocesseur commande un changement d'outil et exécute le cycle d'ébauche de gorge à droite avec l'outil ayant le bord d'attaque à droite.

Le processus se déroule comme précédemment ; seul le sens de passe a changé, et le microprocesseur utilise le profil fini translaté 51 et la droite de descente pour calculer les déplacements et les commandes.

Le profil fini est représenté par 52 et les hachures 53 représentent les portions de gorge restant à enlever.

La description a été faite par rapport à une gorge dont la concavité est orientée suivant l'axe X ; mais le procédé reste identique pour une gorge dont la concavité est orientée suivant l'axe de Z.

Les exemples des figures 4 et 5 concernent des gorges simples. Si l'on doit traiter une concavité complexe, telle que celle représentée à la figure 6, le programmeur va programmer l'usinage du profil de cette concavité. Le microprocesseur va commencer par traiter le profil à gauche de la droite de descente, constitué par les concavités 61 et 63 et va éliminer les concavités incluses dans ce profil. Il élimine donc la concavité 63 et usine le profil 61.

Ensuite, le dispositif traite la partie droite, constituée des profils 62 et 64, et usine le profil 62 sans tenir compte de la concavité 64. Par la suite, chacune des concavités simples 63, 64 sera traitée comme on l'a expliqué plus haut.

Il est bien évident que, si la droite de descente tombe dans la concavité 63 par exemple, on usine alors en une seule fois le profil gauche constitué par 61 et la partie de 63 située à gauche de la droite de descente ; puis, le profil droit constitué par 62 et la partie de 63 située à droite de la droite de descente, et dans ce cas, l'usinage de 64 (concavité simple) devrait être programmé séparément comme on l'a indiqué plus haut.

Il est bien évident que toute modification à la portée de l'homme de l'art fait également partie de l'invention.

**Revendications**

1. Procédé d'usinage d'un profil fini par une machine-outil à commande numérique, caractérisé en ce qu'il comprend les étapes suivantes :

1) Introduction d'une description du profil fini, puis du profil brut, respectivement dans un premier et un deuxième moyens de mémorisation ;

2) Traitement de la description du profil fini pour supprimer, après analyse, les portions de profil présentant une concavité et rangement de la description des portions de profil présentant une concavité dans un troisième moyen de mémorisation ;

3) Rangement du profil fini « dit épuré », débarrassé des portions concaves, dans un quatrième moyen de mémorisation.

4) Elaboration de l'ébauche du profil fini épuré par passes successives, en déplaçant l'outil entre les coordonnées fournies par la mémoire du profil fini épuré et celles fournies par la mémoire du profil brut.

2. Procédé selon la revendication 1, caractérisé en ce qu'il comprend une étape supplémentaire de prise en compte des modifications des conditions de coupe (profondeur de passe, vitesse d'avance, vitesse de broche) programmées en même temps que la description du profil brut.

3. Procédé selon la revendication 1 ou 2, caractérisé par une opération de finition permettant d'achever le profil fini épuré.

4. Procédé selon les revendications 1, 2 ou 3, caractérisé par une opération de tournage des concavités.

5. Procédé selon la revendication 4, caractérisé en ce que, lors de l'opération de tournage d'une cavité complexe, la commande numérique :

a) récupère le profil d'une concavité rangée dans le troisième moyen de mémorisation et examine les portions de profil situées à droite et à gauche d'une droite de descente programmée ;

b) élimine, des profils situés à droite et à gauche de la droite de descente, les concavités incluses dans l'un des profils droit ou gauche pour transformer la concavité complexe en concavité simple ;

c) effectue l'opération d'usinage de la concavité simple ;

d) réitère les opérations précédentes sur une autre concavité simple de la concavité complexe.

6. Procédé selon la revendication 5, caractérisé en ce que la commande numérique, lors de l'opération de tournage des concavités complexes,

a) Récupère le profil d'une concavité simple, rangé dans le troisième organe de mémorisation, et détermine la portion de profil située à droite d'une droite de descente de l'outil, la partie gauche étant conservée dans un moyen de mémorisation ;

b) usine, par passes successives, avec un outil dont la face de coupe est à droite, ce profil droit de concavité simple à droite de la droite de descente, jusqu'à la rencontre par l'outil du profil fini translaté d'une valeur représentant les surépaisseurs en X et en Z ;

c) commande un changement d'outil et usine, par passes successives et de profondeur donnée, avec un outil dont la face de coupe est à gauche, le profil de concavité à gauche de la droite de descente jusqu'à la rencontre par l'outil du profil gauche translaté d'une valeur représentant les surépaisseurs en X et en Z déterminées par programmation.

7. Dispositif permettant la mise en œuvre du procédé de l'une des revendications précédentes, caractérisé en ce qu'il comprend :

— des moyens (6, 10, 11, 12) de délivrer à un microprocesseur (5), relié à un bus (4), un programme définissant le profil brut et le profil fini, ledit microprocesseur, après compilation, adressant lesdits profils brut et fini respectivement dans des premières mémoires vives (70, 71) ;

— des secondes mémoires mortes (8 et 9), reliées au bus (4), comprenant respectivement les paramètres de la machine d'usinage (1) à commander et un logiciel ;

— des moyens de traiter le profil fini pour en ôter les parties concaves et élaborer un profil fini dit épuré ;

— une troisième mémoire vive (72), destinée à recevoir la description desdites parties concaves (3) ;

— une quatrième mémoire vive (73), destinée à recevoir le profil fini dit épuré ; et

— des moyens d'assurer la liaison et la transmission des commandes entre le bus (4) et la machine à commander (1).

8. Dispositif selon la revendication 7, caractérisé en ce qu'il comprend une cinquième mémoire (74) destinée à recevoir les valeurs définissant un profil fini épuré et translaté en X et en Z suivant des valeurs définies par programmation.

## Claims

1. A process for machining a finished profile by means of a digitally controlled machine tool, characterized in that it comprises the following steps :

1) Introduction of a description of the finished profile, then of the rough profile, respectively into a first and a second storage means ;

2) Processing of the description of the finished profile so as to remove, after analysis, the profiled portions having a concavity and storage of the description of the profile portions having a concavity in a third storage means ;

3) Storage of the so-called « purified » finished profile, freed of the concave portions, in a fourth storage means ;

4) Elaboration of the preliminary shape of the purified finished profile in successive cuts, by moving the tool between the coordinates supplied by the purified finished profile memory and those supplied by the rough profile memory.

2. The process according to claim 1, characterized in that it comprises an additional step taking into account modifications of the cutting conditions (cutting depth, speed of advance, spindle speed) programmed at the same time as the description of the rough profile.

3. The process according to claim 1 or 2, characterized by a finishing operation for finishing the purified finished profile.

4. The process according to claims 1, 2 or 3 characterized by an operation for turning the concavities.

5. The process according to claim 4, characterized in that, during the operation for turning a complex cavity, the digital control :

a) recovers the profile of a concavity stored in the third storage means and examines the profile portions situated on the right and on the left of a programmed descending straight line ;

b) eliminates, from the profiles situated at the right and at the left of the descending straight line, the concavities included in one of the right hand or left hand profiles for transforming the complex cavity into a simple concavity ;

c) effects the operation for machining the simple concavity ;

d) reiterates the preceding operations on another simple concavity of the complex concavity.

6. The process according to claim 5, characterized in that the digital control, during the operation for turning the complex concavities :

a) recovers the profile of a simple concavity, stored in the third storage means and determines the profile portion situated on the right of a straight line along which the tool descends, the left hand part being stored in a storage means ;

b) machines, by successive passes and with a tool whose cutting face is turned to the right, this simple concavity right hand profile on the right of the descending straight line, until the tool reaches the finished profile translated by a value representing the extra thicknesses at X and at Z ;

c) orders a tool change and machines, by successive passes of given depth with a tool whose cutting face is on the left, the concavity profile on the left of the descending straight line until the tool meets the left hand profile translated by a value representing the extra thicknesses at X and at Z determined by programming.

7. A device for implementing the process as claimed in one of the preceding claims, characterized in that it comprises :

— means (6, 10, 11, 12) for delivering to a microprocessor (5), connected to a bus (4), a program defining the rough profile and the finished profile, said microprocessor, after compilation, addressing said rough and finished profiles respectively into first RAMs (70, 71) ;

— second ROMs (8 and 9), connected to the bus (4) comprising respectively the parameters of the finishing machine (1) to be controlled and a software ;

— means for processing the finished profile for removing the concave parts and elaboration of a so-called purified profile ;

— a third RAM (72), for receiving the description of said concave parts (3) ;

— a fourth RAM (73), for receiving the so-called purified finished profile ; and

— means for providing connection and transmission of the controls between the bus (4) and the machine to be controlled (1).

8. The device according to claim 7, characterized in that it comprises a fifth memory (74) for receiving the values defining a purified finished profile translated at X and at Z by values defined by programming.

**Patentansprüche**

1. Verfahren zur Herstellung eines fertigbearbeiteten Profils durch eine Werkzeugmachine mit numerischer Steuerung, dadurch gekennzeichnet, dass es die folgenden Schritte aufweist :

1) Eingabe einer Beschreibung des fertigbearbeiteten Profils und danach des Rohprofils jeweils in eine erste und eine zweite Speichervorrichtung ;

2) Verarbeitung der Beschreibung des fertigbearbeiteten Profils, um, nach einer Analyse, die Profilabschnitte, welche eine Konkavität aufweisen, zu eliminieren, und Speicherung der Beschreibung der Profilabschnitte mit einer Konkavität in einer dritten Speichervorrichtung ;

3) Speicherung des fertigbearbeiteten, als « bereinigt » bezeichneten und von seinen konkaven Abschnitten befreiten Profils in einer vierten Speichervorrichtung ;

4) Ausarbeitung einer Ausgangsform des fertigbearbeiteten, bereinigten Profils durch aufeinanderfolgende Schnitte, wobei das Werkzeug zwischen den vom Speicher des fertigbearbeiteten bereinigten Profils gelieferten Koordinaten und den vom Speicher des Rohprofils gelieferten Koordinaten verschoben wird.

2. Verfahren nach Anspruch 1, dadurch gekennzeichnet, dass es einen weiteren Schritt aufweist, wo den Änderungen der Schnittbedingungen (Tiefe des Schnitts, Vorschubsgeschwindigkeit, Spindelgeschwindigkeit) Rechnung getragen wird, die gleichzeitig mit der Beschreibung des Rohprofils programmiert werden.

3. Verfahren nach Anspruch 1 oder 2, gekennzeichnet durch einen Endbearbeitungsschritt, der die Vollendung des fertigbearbeiteten bereinigten Profils ermöglicht.

4. Verfahren nach den Ansprüchen 1, 2 oder 3, gekennzeichnet durch einen Schritt der Drehbearbeitung der Konkavitäten.

5. Verfahren nach Anspruch 4, dadurch gekennzeichnet, dass bei der Drehbearbeitung einer komplexen Konkavität die numerische Steuerung :

a) das Profil einer in der dritten Speichervorrichtung gespeicherten Konkavität abfragt und die rechts und links einer programmierten Absenkungsgeraden befindlichen Profilabschnitte prüft ;

b) bei den rechts und links der Absenkungsgeraden angeordneten Profilen die in einem der rechts oder links befindlichen Profile angeordneten Konkavitäten eliminiert, um die komplexe Konkavität in eine einfache Konkavität zu verwandeln ;

c) die Bearbeitung der einfachen Konkavität ausführt ;

d) die vorhergenden Schritte an einer anderen einfachen Konkavität der komplexen Konkavität wiederholt.

6. Verfahren nach Anspruch 5, dadurch gekennzeichnet, dass die numerische Steuerung bei der Drehbearbeitung der komplexen Konkavitäten

a) das Profil einer in der dritten Speichervorrichtung gespeicherten einfachen Konkavität abfragt und den rechts einer Absenkungsgeraden des Werzeugs befindlichen Profilabschnitt bestimmt, während der linke Teil in einer Speichervorrichtung gespeichert wird ;

b) in aufeinanderfolgenden Schnitten, mit einem Werkzeug, dessen Schnittfläche sich rechts befindet, dieses rechte Profil der einfachen Konkavität rechts von der Absenkungsgeraden bearbeitet, bis das Werkzeug auf das fertigbearbeitete und um einen Wert, der die Bearbeitungszugaben darstellt, gemäss X und Z verschobene Profil stösst ;

c) einen Werkzeugwechsel bewirkt und in aufeinanderfolgenden Schnitten gegebener Tiefe mit einem Werkzeug, dessen Schnittfläche sich links befindet, das Konkavitätsprofil links der Absenkungsgeraden bearbeitet, bis das Werkzeug auf das linke, um einen Wert, welcher die durch Programmierung bestimmten Bearbeitungszugaben darstellt, gemäss X und Z verschobene Profil stösst.

7. Vorrichtung zur Anwendung des Verfahrens nach einem der vorhergehenden Ansprüche, dadurch gekennzeichnet, dass sie aufweist :

— Mittel (6, 10, 11, 12), um einem, an einen Bus (4) angeschlossenen Mikroprozessor (5) ein Programm zu liefern, welches das Rohprofil und das fertigbearbeitete Profil bestimmt, wobei besagter Mikroprozessor, nach der Programmübersetzung, besagtes Rohprofil und besagtes fertigbearbeitetes Profil an erste Lebendspeicher (70, 71) adressiert ;

— zweite, an den Bus (4) angeschlossene, Nurlesespeicher (8 und 9), die jeweils die Kennwerte der zu steuernden Bearbeitungsmaschine (1) und eine Software aufweisen ;

— Mittel zur Verarbeitung des fertigbearbeiteten Profils, um die konkaven Abschnitte zu eliminieren und ein sogenanntes bereinigtes, fertigbearbeitetes Profil auszuarbeiten ;

— einen dritten Lebendspeicher (72), welcher die Beschreibung der besagten konkaven Abschnitte (3) aufnimmt ;

— einen vierten Lebendspeicher (73), welcher das sogenannte bereinigte fertigbearbeitete Profil aufnimmt ; und

— Verbindungs- und Übertragungsmittel der Steuerungen zwischen dem Bus (4) und der zu steuernden Maschine (1).

8. Vorrichtung nach Anspruch 7, dadurch gekennzeichnet, dass sie einen fünften Speicher (74) aufweist, der die Werte aufnimmt, welche ein fertigbearbeitetes, bereinigtes Profil bestimmen, das gemäss X und Y um durch Programmierung bestimmte Werte verschoben ist.

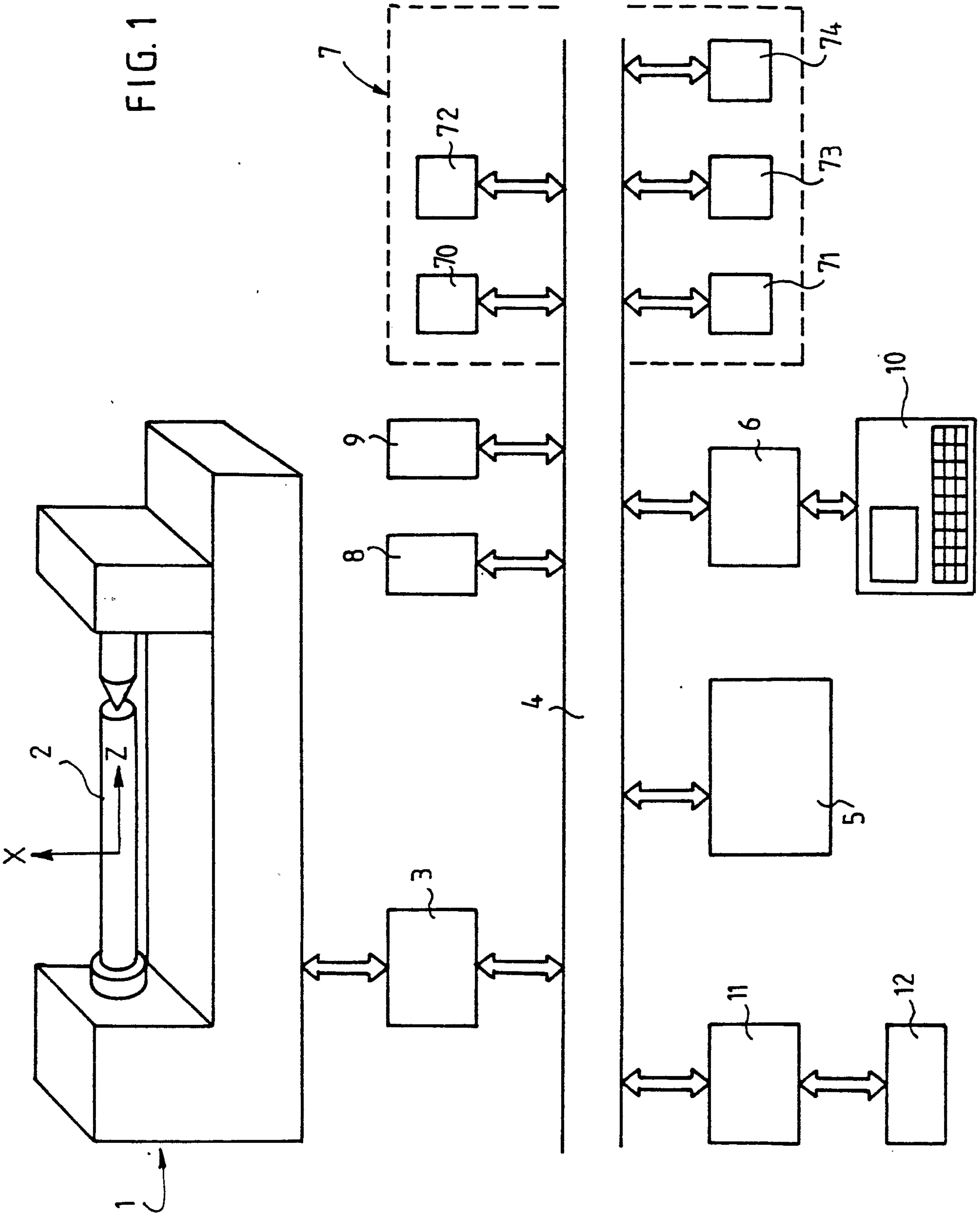


FIG. 1

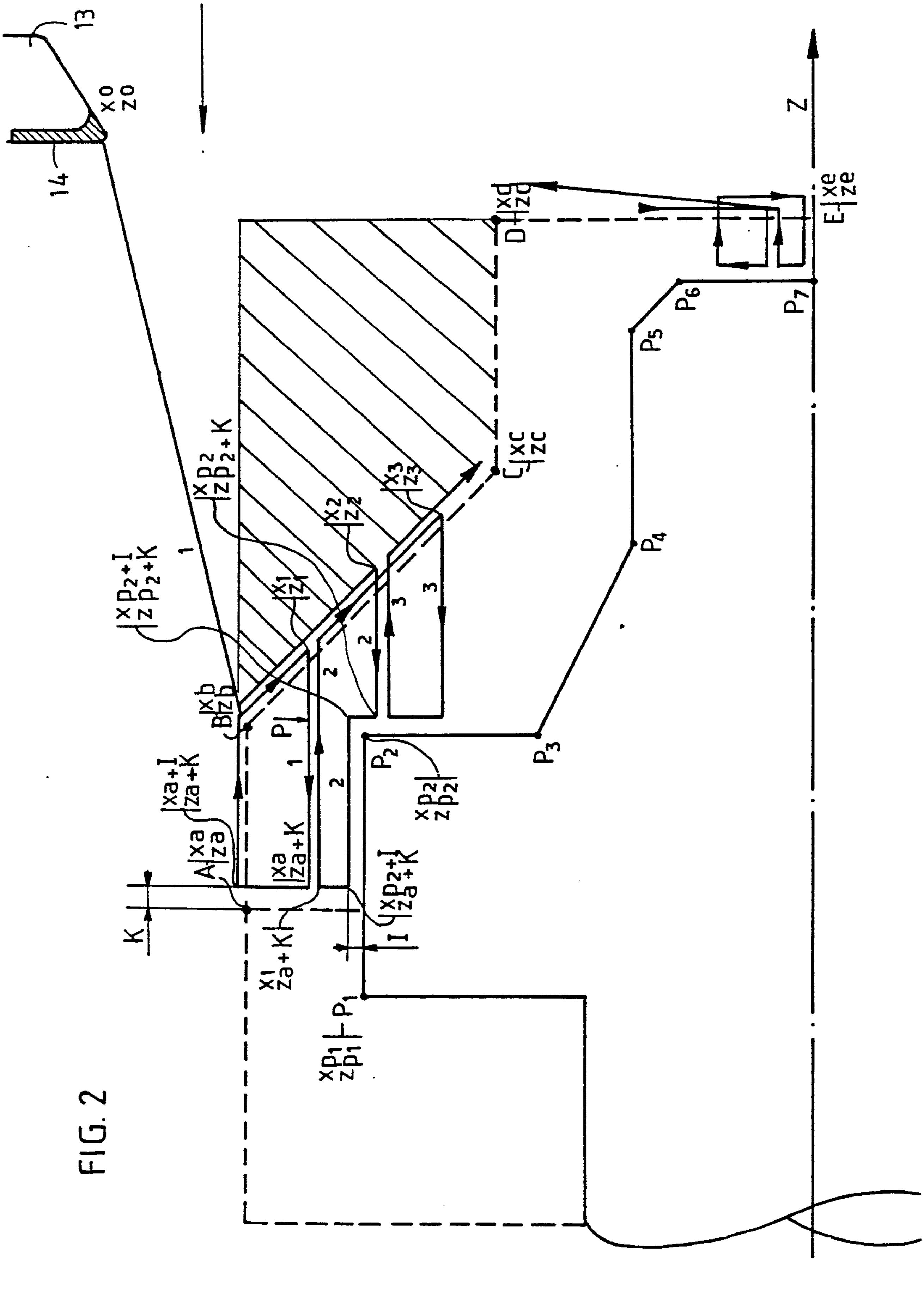

FIG. 2

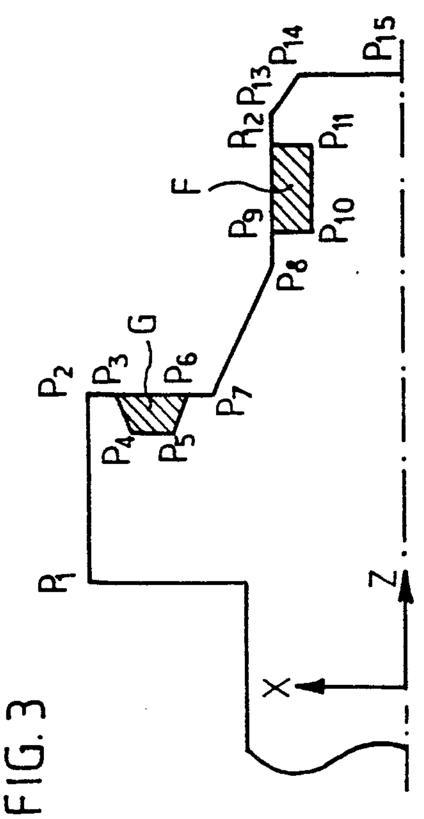


FIG. 3

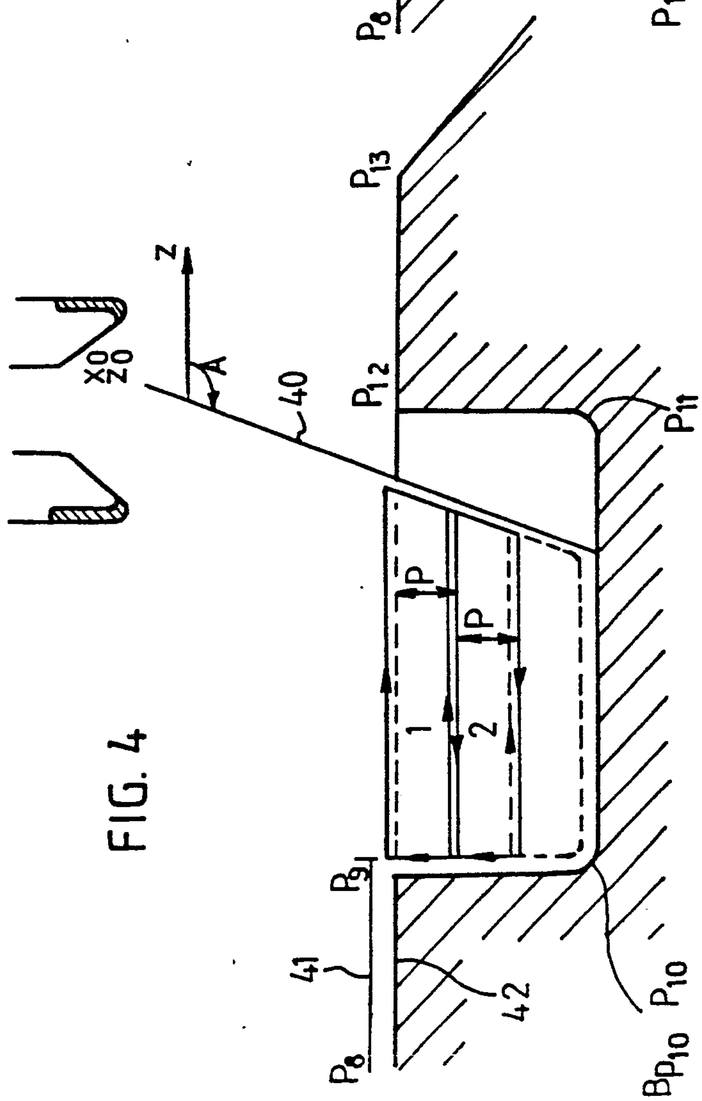


FIG. 4

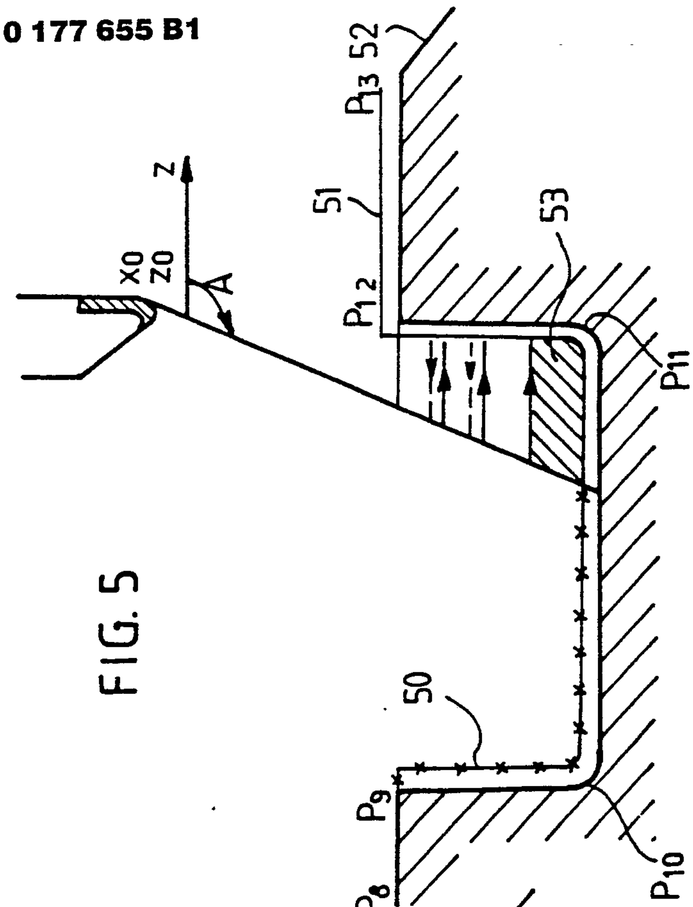


FIG. 5

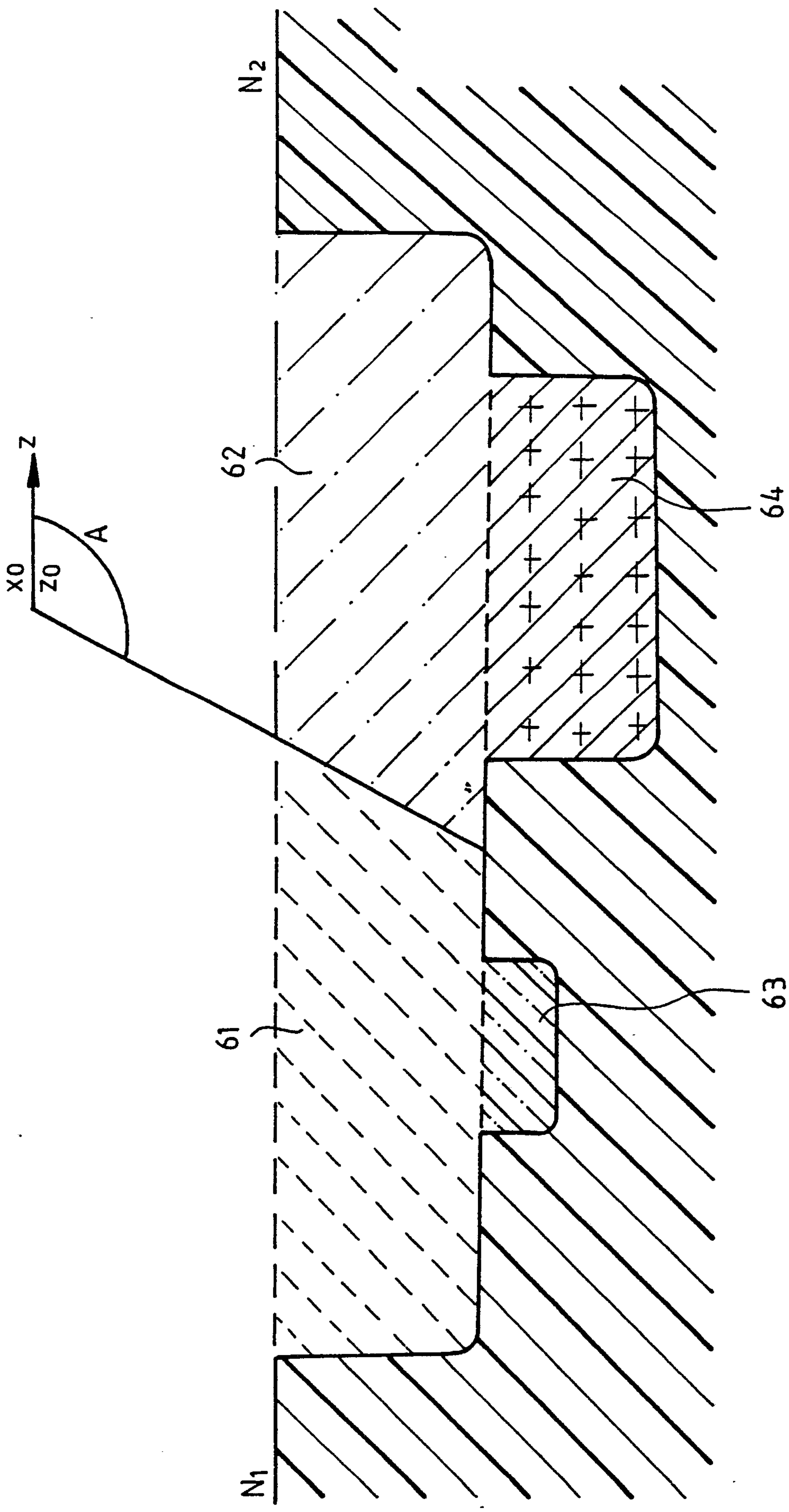


FIG. 6